# EUROPEAN PATENT APPLICATION

(11) **EP 2 322 991 A1**
(43) Date of publication of application: **18.05.2011**
(21) Application number: 10190448.0
(22) Date of filing: 09.11.2010
(51) Int. Cl.: G03B 21/30

(54) **Projection screen**

(30) Priority: 09.11.2009 FR 0905411
(71) Applicant: Anagram-Acoustics s.a.r.l., 93360 Neuilly-Plaisance (FR)
(72) Inventor: Congard, Patrice Bernard François, 75020 Paris (FR); Charrier, Jean-Pierre, 92310 Sèvres (FR)
(74) Representative: Manaton, Ross Timothy

(57) **Abstract**

The invention relates to a roll-up projection screen comprising a motorized roll-up tube (25) capable of rolling up a projection surface and a cladding (40) of an opening provided in a ceiling for the attachment of the said roll-up tube in a plenum above the said ceiling, the said cladding comprising a central portion (45) furnished with a slot (49) provided for the said projection surface to pass through when it is unrolled.

## Description

The field of the present invention is that of screens for the projection of images, notably video images. More precisely, it relates to screens called front-projection screens, from a projector that is on the same side of the projection surface of the screen as the spectators.

It relates, in the context of the present invention, to roll-up front-projection screens which can be rolled up when they are not used, in order to disappear from view. Such screens usually consist of a rectangular projection surface made of textile or plastic flexible material, capable of being rolled up about a tube, called the roll-up tube, in order to retract when they are not used and to be unrolled in order to extend vertically facing a projector in order to be used.

Advantageously, such screens are furnished with motorized means for rolling up the said roll-up tube. Such screens can be installed in the plenum of a ceiling, or of a false ceiling, so as to be as little visible as possible when they are in the rolled-up position.

Conventionally, a slot arranged in the ceiling level with the screen allows the passage of a ballast bar capable of pulling the screen by gravity and of tensioning it when the roll-up tube is unrolled.

Similarly, when the roll-up tube is rolled up, the ballast bar holds the screen taut by gravity. The drawback of such a slot is that it is difficult to produce aesthetically and in correct alignment with the screen.

In order to solve this problem, certain creations comprise a casing which surrounds the roll-up tube and supports its ends, edges capable of being connected to an opening arranged in the ceiling, and a bottom face being substantially in the same plane as the ceiling and blanking off the opening, such a bottom face comprising the slot through which the projection surface can be unrolled.

Usually, the casing is furnished with peripheral protrusions extending in its bottom plane.

The peripheral protrusions extending over the whole of the periphery of the casing conform to the shape of the bottom face of the ceiling.

In more advanced versions, the slot provided in the ceiling is blanked off by a hatch furnished with an automatic opening and closing mechanism allowing the screen to pass through when the latter is unrolled, and for fully blanking off the slot when the screen is fully rolled up.

Thus, the screen is totally invisible when it is not used.

Such screens have the drawback of being difficult to install, notably when the ceiling is not strictly horizontal or strictly flat, since the roll-up tube has to be horizontal.

Moreover, they often have a weight that the ceiling alone cannot support, and require a safety attachment in the top portion of the plenum, for example to a beam or a concrete slab depending on the type of construction. This increases the difficulty of installing such screens.

A first subject of the present invention is a motorized roll-up screen that can be easily fitted into the plenum of a ceiling.

A second subject of the present invention is a device making it possible to easily fit a motorized roll-up screen into the plenum of a ceiling.

In one aspect, the present invention provides a motorized roll-up projection screen comprising a motorized roll-up tube capable of rolling up a projection surface attached in a plenum between a ceiling forming the bottom limit of the said plenum and a carrying structure forming the top limit of the plenum, and a finish cladding capable of blanking off a cut-out provided in the ceiling for the installation of the roll-up tube in the plenum, the said cladding being attached to the ceiling independently of the roll-up tube, the said cladding comprising at least one slot allowing the projection surface to pass through when it is unrolled, the said roll-up tube being attached to the said carrying structure.

Preferably, a screen according to the invention comprises, at each of its ends, means for adjusting the position of the roll-up tube in three directions.

The said cladding preferably comprises a peripheral portion attached around the cut-out provided in the ceiling and a central portion that is inserted into the peripheral portion by gravity. The said central portion comprises a slot capable of allowing the projection surface to pass through when it is unrolled.

Advantageously, the slot allowing the projection surface to pass through is furnished with a hatch capable of opening to allow the said projection surface to be unrolled and of closing again when the projection surface is rolled up.

The said hatch is preferably provided with movement means controlled by means for synchronizing the respective movements of the hatch and of the roll-up tube, so that the hatch opens to open the said slot before the projection surface is unrolled and it closes the said slot again after the projection surface has been fully rolled up.

In another aspect, the invention provides a motorized roll-up projection screen comprising on the one hand a motorized roll-up tube capable of rolling up a projection surface and, on the other hand, an assembly for cladding an opening provided in a ceiling for the attachment of the said roll-up tube in a plenum above the said ceiling, characterized in that the said cladding assembly comprises a peripheral angle bar delimiting an opening and a detachable central portion furnished with a slot provided for the said projection surface to pass through when it is unrolled, the said detachable central portion blanking off the said opening.

In preferred embodiments, the cladding assembly is placed so that the said slot is substantially vertically aligned with the projection surface when it is unrolled.

Preferably, the roll-up tube is attached to the top portion of the plenum by attachment means comprising means for adjusting its position in three directions.

Conveniently, the blanking central portion rests by gravity in the opening of the said cladding assembly.

In some preferred embodiments, the roll-up tube is isolated from the space surrounding it by isolation means. In such embodiments, the isolation means may comprise a casing surrounding the roll-up tube, the said casing being furnished with a slot capable of allowing the said projection surface to pass through when it is unrolled, the said slot being blanked off by at least one brush extending over the whole of its length.

In some preferred embodiments, the detachable central portion comprises a movable hatch capable of blanking off the said slot in a first position and capable of moving to a position opening the said slot in order to allow the projection surface to pass through, the said movable hatch comprising drive means capable of controlling the movement thereof, and means for synchronizing the said drive means with the rolling and unrolling of the projection surface about the roll-up tube.

In yet another aspect, the invention provides an adaptation device for a roll-up screen in a ceiling, characterized in that it comprises an assembly for cladding an opening provided in the ceiling for the attachment of the said screen in a plenum above the said ceiling, the said cladding assembly comprising a peripheral angle bar delimiting an opening and a detachable central portion furnished with a slot provided for the said projection surface to pass through when it is unrolled, the said detachable central portion blanking off the said opening.

The subjects, features and advantages of the present invention emerge from the description given below of an embodiment of the invention given as a non-limiting example with respect to the appended drawings in which:
Fig. 1 is a schematic view in perspective of a fitted roll-up projection screen according to the prior art;
Fig. 2 is a schematic view in cross section of a roll-up projection screen according to the invention;
Fig. 3 is a schematic view in longitudinal section of a roll-up projection screen according to the invention;
Fig. 4 is a view in perspective from inside a plenum of a roll-up projection screen according to the invention;
Fig. 5 is a view in perspective of a detail of Fig. 4;
Fig. 6 is a view in perspective from below of the ceiling of a device according to the invention;
Fig. 7 is a view in partial cross section of a variant of a first embodiment of the invention;
Fig. 8 is a view in cross section of a second preferred embodiment of the invention; and
Fig. 9 is a view in cross section of a variant of a second preferred embodiment of the invention.

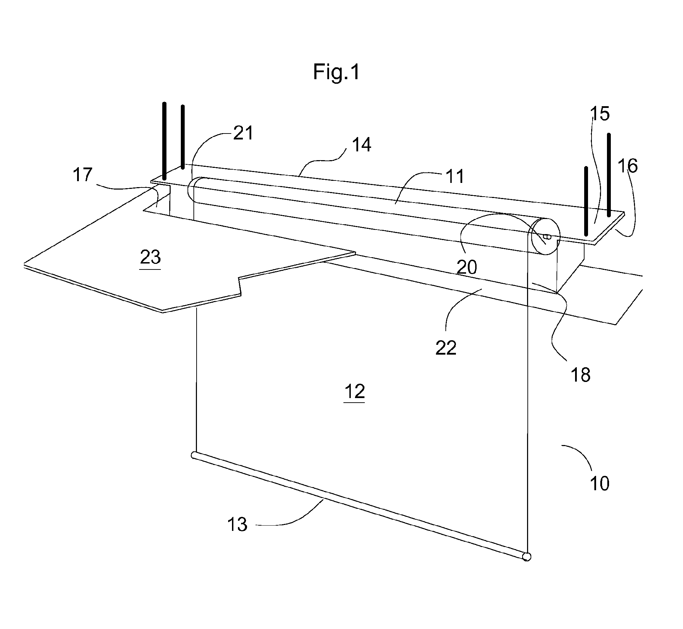

In greater detail, with reference to Fig. 1, a projection screen 10 of the prior art comprises a roll-up tube 11 about which a projection surface 12 is rolled up, the bottom edge of which surface is ballasted by a ballasting element 13, usually consisting of a bar secured to the bottom edge of the projection surface 12.

The roll-up tube 11 is attached by its ends to a casing 14. The end 21 comprises an attachment of the head of a motor of the axial type, while the end 20 comprises a bearing allowing the tube 11 to rotate independently of the casing 14.

Drive means are provided inside the roll-up tube 11 so as to allow the axial motor (not shown) to rotate the tube 11.

The casing 14 is attached to the edges of an opening 17 arranged in a ceiling 23 by attachment means provided for this purpose. Typically, such attachment means comprise a pair of longitudinal protrusions 15 which extend the top of the casing 14 in the same plane, and assemblies 16 each comprising a threaded rod and at least one nut for connecting the protrusion 15 to a top structural portion delimiting the plenum from the top (not shown).

A decorative bearing board 22, peripherally extending in the same plane the base of the casing 14, blanks off the ceiling opening 17.

The bearing board 22 rests against the ceiling 23 from below. An opening 18 is provided at the base of the casing 14 in order to allow the ballast bar 13 and the projection surface to pass through so that the latter can traverse the ceiling 23 and the base of the casing and be unrolled in the vertical position beneath the ceiling.

In certain embodiments, a hatch 18' closes the opening 18 when the projection surface 12 is rolled up. Means (not shown) for opening and closing the hatch 18' are then provided.

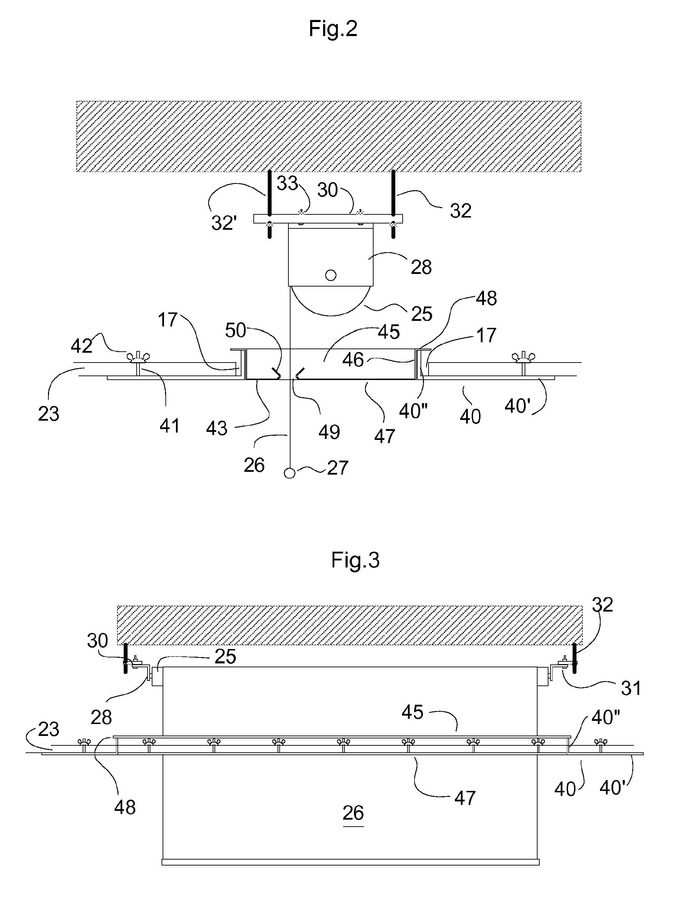

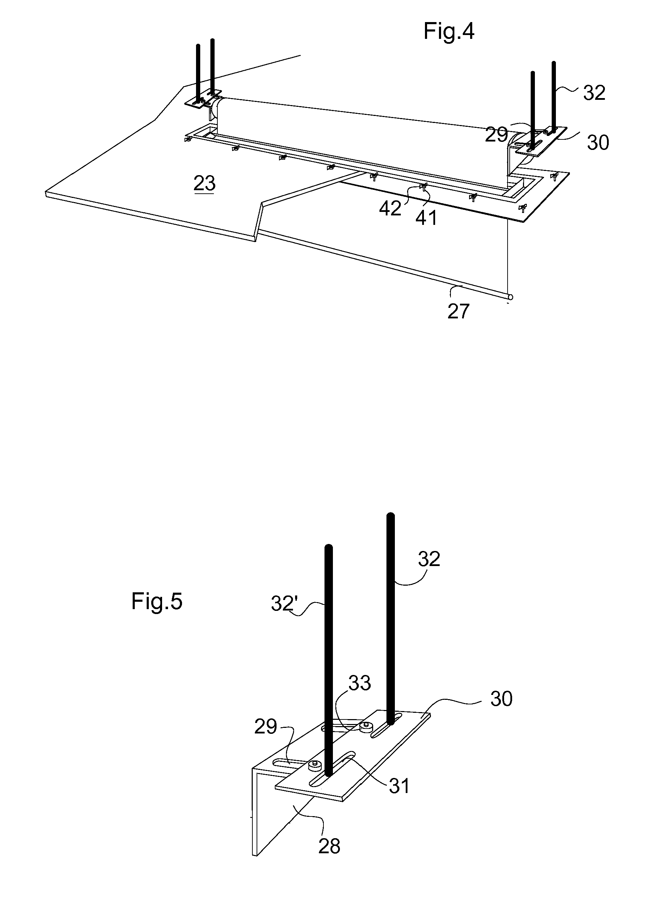

A screen according to the invention comprises, with reference to Figs. 2, 3, 4, 5 and 6, a roll-up tube 25 about which a projection surface 26 furnished with a ballast bar 27 secured to its bottom edge is rolled up. The roll-up tube 25 is conventionally attached by its two ends to supporting brackets 28. The supporting brackets 28 comprise means for adjusting the position of the roll-up tube 25, means which comprise oblong passageways also known as longitudinal passageways 29 provided in a substantially horizontal portion of the said brackets 28 and substantially aligned with the axis of the roll-up tube 25, two backboards 30 pierced respectively with two oblong passageways 31 (Fig. 5) placed in alignment and in a direction generally normal to the axis of the tube 25. These oblong passageways are used to adjustably attach each backboard 30 to a carrying structure delimiting the plenum from the top. This attachment may consist, for each backboard 30, of two threaded rods 32, 32', of stopping means and of means for clamping the backboards comprising, for example, a plurality of nuts and washers.

By adjusting the stopping means, the backboards 30 can therefore be adjusted individually in height, which makes it possible to adjust both the position in height and the horizontality of the roll-up tube 25.

The oblong passageways 31 of the backboards 30 allow the roll-up tube 25 to be positionally adjusted in the horizontal plane in a direction generally transverse to the axis of the tube.

Two drill holes are also provided in each backboard 30 so as to allow the backboard to be connected to a supporting bracket 28.

Each of the brackets 28 are suspended from the backboards 30 by means of bolts 33, preferably furnished with lock-nuts and lock-washers, said bolts passing through both the drill holes provided in the backboards 30 and the oblong passageways 29 of the brackets 28. Thus, before the bolts are tightened, the brackets 28 can be moved in two directions in the horizontal plane, in a movement limited by the length of the oblong passageways 29 and 31 minus the diameter of the bolts 30.

In this way, the roll-up tube 25 can be positioned so as to be adjustable in the horizontal plane, in a longitudinal direction relative to its axis.

The roll-up tube 25 is attached in a plenum limited at its top portion by a carrying structure and at its bottom portion by a ceiling or false ceiling 23 in which an opening 17 is cut. Generally, the opening 17 is slightly larger than the flat outline of the assembly consisting of the roll-up tube 25, the two brackets 28 and the two backboards 30 so that the said assembly can be easily inserted into the plenum. The roll-up tube 25 is then adjusted in its overall vertical position and in its horizontality with the aid of the nuts that attach the backboards 30 to the threaded rods 32, 32'. The position of the tube 25 in the horizontal plane is then adjusted with the aid of the sliding of the bolts 33 in the oblong passageways 29 of the brackets and of the sliding of the threaded rods 32, 32' in the oblong passageways 31 of the backboards, before the bolts and nuts provided for this purpose are tightened.

An assembly for cladding the opening 17 is also provided and comprises a peripheral portion consisting of a peripheral angle bar 40 comprising a substantially horizontal portion 40' and a substantially vertical portion 40" and extending generally over the periphery of the opening 17 arranged in the ceiling. The horizontal portion 40' is furnished with a plurality of threaded rods 41 attached to its top face by any appropriate means, such as crimping or welding, and extending at right angles to the plane of the said horizontal portion, that is to say vertically, upwards.

Such threaded rods are designed to be longer than the thickness of the ceiling, which is conventionally between 13 and 26 mm, so that they can traverse it through drill holes provided for this purpose. Nuts 42 and washers, the nuts preferably being wing nuts, are used to clamp the top face of the horizontal portion 40' of the peripheral angle bar 40 against the bottom face of the ceiling 23 so as to attach the angle bar 40 to the said ceiling.

The vertical portion 40" of the peripheral angle bar is designed to be higher than the thickness of the ceiling so as to fully mask the edge of the opening 17 of the ceiling 23.

The peripheral angle bar 40 is designed to define an opening 43 which borders the opening 17 on the inside, having dimensions that are sufficient to allow the assembly consisting of the roll-up tube 25, the brackets 28 and the backboards 30 to pass through.

Said cladding assembly also comprises a central portion 45 capable of blanking off the opening 43. The central portion 45 has the general shape of a tray consisting of a rectangular peripheral vertical edge 46 of dimensions that allow it to be inserted into the vertical wall 40" of the peripheral angle bar with sufficient clearance to make this insertion easy, of a bottom 47 extending in a plane normal to that of the vertical edge 46 and generally in line with the horizontal portion 40' of the peripheral angle bar 40, and of at least one peripheral top protrusion 48 capable of resting on the edge of the vertical portion 40" of the angle bar 40 designed so that the blanking element 45 rests by gravity on the peripheral angle bar 40 by presenting the bottom 47 substantially in line with the plane of the horizontal portion 40' of the said angle bar.

Preferably, the blanking element 45 is made of metal.

The blanking element 45 comprises a longitudinal slot 49 of constant width extending over the whole of its length. Advantageously, the slot 49 comprises two rims 50, which are symmetrical and face one another, consisting of folds of the material forming the said central portion 45, preferably metal. The slot 49 is designed to allow the ballast bar and the projection surface to pass through the central portion 45.

In order to install the screen assembly in the plenum of a ceiling, an opening 17 is first cut out with sufficient dimensions to allow the roll-up tube 25 and its attachment brackets 28 to pass through. A template (not shown) will be provided for this purpose. The four threaded rods 32 and 32' are then attached in the structural portion limiting the plenum from the top. The brackets 28 are attached to the threaded rods by means of the backboards 30 and bolts connecting them. The height and horizontality of the tube 28 are then adjusted with the aid of nuts which move along the threaded rods 32, 32'. Then, with the aid of a template, passageways are pierced to allow the threaded rods 41 to pass through the ceiling 23. The peripheral angle bar 40 is then offered up under the ceiling and it is placed resting against the ceiling 23 from below, the threaded rods 41 passing through the said ceiling. The angle bar 40 is tightened against the ceiling 23 with the aid of the nuts 42, preferably by using bearing washers between the top face of the ceiling and the said nuts. This operation will be made easier by using wing nuts. The horizontal position of the roll-up tube 25 is then adjusted either by referring to a template, or to appropriate measurements, in order to define the position of the ballast bar substantially level with the slot 49 of the central portion 45. The central portion 45 is then slantingly inserted into the opening 43 of the cladding assembly 40, 40' and 40". The central portion 45 is positioned so that the peripheral protrusion 48 rests on the top edge of the vertical portion 40" of the peripheral angle bar 40 by gravity.

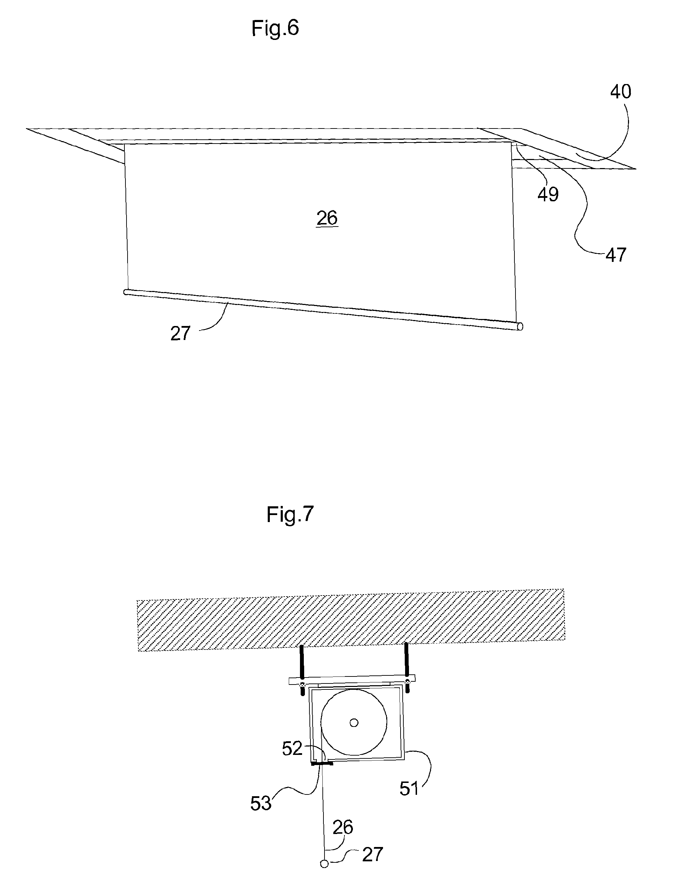

A variant execution of the first embodiment of the invention, with reference to Fig. 7, comprises means for isolating the projection surface 26. Such means make it possible to protect the projection surface 26 when it is rolled up in order to prevent debris, insects or other elements from being rolled up with the latter, and damaging it or dirtying it. Such means preferably comprise a protective casing 51 which surrounds the roll-up tube 25 over the whole of its length. The casing 51 comprises a longitudinal slot 52, of constant width, which extends over all its length, provided substantially level with the ballast bar 27 when the projection surface 26 is rolled up. The slot 52 is designed to be wide enough not to come into contact with the cloth when the latter is fully unrolled, its position in the horizontal direction normal to its plane varying depending on the number of turns rolled up about the roll-up tube. Advantageously, a pair of brushes 53 placed facing one another and blanking off the slot 52 is provided. The brushes 53 extend over the whole length of the slot 52 and allow the ballast bar 27 and the projection surface 26 to pass through the said slot 52 while preventing insects or debris from entering the casing.

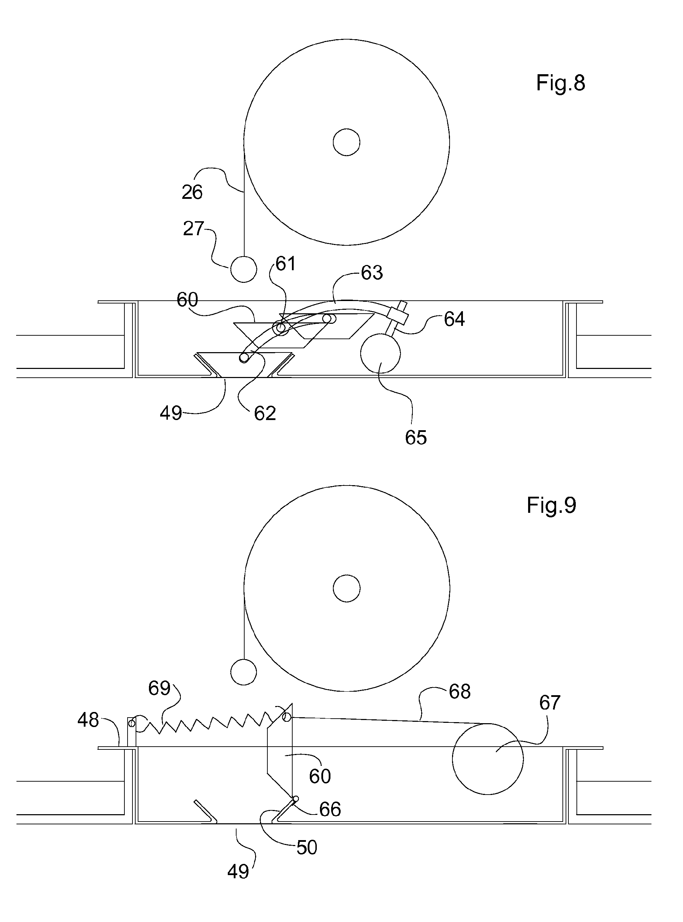

A second preferred embodiment of the invention is described in Figs. 8 and 9. In a first variant (Fig. 8), a movable hatch 60 furnished with guides 61 at its two ends is capable of moving along a curved guide groove 62 in which the two guides 61 slide. The movable hatch 60 can move between two extreme positions, a first position totally blanking off the slot 49, and a second position opening it fully to allow the ballast bar 27 and the projection surface 26 to pass through the said slot. The movable hatch 60 is set in motion by two transmission arms 63 each connected by one of their ends to one of the guides 61. The transmission arms 63 are also connected by the other end to a lever 64 secured in rotation to the shaft of a drive motor 65. The motor 65 is preferably an electric motor the movement of which can be easily controlled by an appropriate electronic device. It may be a servomotor or a stepping motor, for example.

In a second variant, the movable hatch 60 is attached to a hinge 66 of which one portion is attached to a rim 50 of the slot 49. Thus, the hatch 60 can pivot so that, in one extreme position, it can blank off the slot 49, and in the other extreme position (as shown in Fig. 9), it can open it fully. The hatch 60 is pulled open by means of a halyard 68 which is rolled around an assembly comprising a roll-up tube 67 and an axial motor capable of rotating the said tube. The hatch is pulled closed by a pair of return springs 69 which are connected to the peripheral top protrusion 48 on either side of the hatch 60 so as not to be in the way of the ballast bar 27 when it passes through the slot 49. When the roll-up tube 67 rolls up the halyard 68, the latter rotates the hatch 60 about the hinge 66 to an angular position that is predetermined by the adjustment of an end-of-travel device provided in the axial motor in a conventional manner. When the roll-up tube rotates in the reverse direction and unrolls the halyard 68, the return springs 69 return the hatch 60 to an angular position in which it tends to close again by gravity.

In the two variants of the second embodiment of the invention that are described, control of the motors actuating the hatch 60 is provided so as to be able to synchronize the opening and closing movements of the hatch with the descent and rise of the ballast bar 27 so that the hatch is closed when the ballast bar 27 is in the top position.

Preferably, the movable hatch, its drive means and their control are attached to the said central portion 45 and can easily replace a central portion with no movable hatch as described in the first embodiment.

The embodiments given in the present description are non-limiting examples of the invention which is defined by the following claims.

## Claims

1. A motorized roll-up projection screen comprising on the one hand a motorized roll-up tube (25) capable of rolling up a projection surface and, on the other hand, an assembly for cladding an opening provided in a ceiling for the attachment of the said roll-up tube in a plenum above the said ceiling, **characterized in that** the said cladding assembly comprises a peripheral angle bar (40) delimiting an opening (43) and a detachable central portion (45) furnished with a slot (49) provided for the said projection surface to pass through when it is unrolled, the said detachable central portion blanking off the said opening (43).

2. A projection screen according to claim 1, **characterized in that** the said cladding assembly is placed so that the said slot (49) is substantially vertically aligned with the projection surface when it is unrolled.

3. A projection screen according to one of the preceding claims, **characterized in that** the said roll-up tube is attached to the top portion of the plenum by attachment means (28) comprising means for adjusting its position in three directions.

4. A projection screen according to one of the preceding claims, **characterized in that** the said blanking central portion rests by gravity in the opening (43) of the said cladding assembly.

5. A projection screen according to one of the preceding claims, **characterized in that** the said roll-up tube (25) is isolated from the space surrounding it by isolation means.

6. A projection screen according to claim 6, **characterized in that** the said isolation means comprise a casing surrounding the roll-up tube, the said casing being furnished with a slot capable of allowing the said projection surface to pass through when it is unrolled, the said slot being blanked off by at least one brush extending over the whole of its length.

7. A projection screen according to one of the preceding claims, **characterized in that** the said central portion (45) comprises a movable hatch capable of blanking off the said slot in a first position and capable of moving to a position opening the said slot in order to allow the projection surface to pass through, the said movable hatch comprising drive means capable of controlling the movement thereof, and means for synchronizing the said drive means with the rolling and unrolling of the projection surface about the roll-up tube (25).

8. An adaptation device for a roll-up screen in a ceiling, **characterized in that** it comprises an assembly for cladding an opening provided in the ceiling for the attachment of the said screen in a plenum above the said ceiling, the said cladding assembly comprising a peripheral angle bar (40) delimiting an opening (43) and a detachable central portion (45) furnished with a slot (49) provided for the said projection surface to pass through when it is unrolled, the said detachable central portion blanking off the said opening (43).
